# EUROPEAN PATENT APPLICATION

(11) **EP 3 373 693 A1**
(43) Date of publication of application: **12.09.2018**
(21) Application number: 16862122.5
(22) Date of filing: 02.11.2016
(51) Int. Cl.: H04W 76/02, H04W 84/12, H04W 88/06

(54) **BASE STATION, WLAN TERMINATION NODE, AND WIRELESS TERMINAL**

(30) Priority: 06.11.2015 JP 2015218938
(71) Applicant: KYOCERA Corporation, Kyoto 612-8501 (JP)
(72) Inventor: MITSUI, Katsuhiro, Kyoto-shi Kyoto 612-8501 (JP); NAGASAKA, Yushi, Kyoto-shi Kyoto 612-8501 (JP); MORITA, Kugo, Kyoto-shi Kyoto 612-8501 (JP)
(74) Representative: Viering, Jentschura & Partner mbB Patent- und Rechtsanwälte
(86) International application number: PCT/JP2016/082580
(87) International publication number: WO 2017/078062

(57) **Abstract**

A radio terminal according to an embodiment is connected to a WWAN base station. The radio terminal receives, from the base station, a setting message for instructing a connection process between the radio terminal and a WLAN, receives timer information for setting a timer for determining a failure of the connection process between the radio terminal and the WLAN, where the timer information is included in the setting message, starts the timer based on the timer information, determines that the connection process has failed if the timer expires, and transmits, to the base station, a failure message indicating a failure of the connection process.

## Description

### TECHNICAL FIELD

The present invention relates to a base station, a WLAN terminal node, and a radio terminal in a system configured to link WLAN to WWAN.

### BACKGROUND ART

In recent years, a radio terminal corresponding to both communication schemes of WWAN (Wireless Wide Area Network) communication and WLAN (Wireless Local Area Network) communication, has become widespread.

In order to provide a high-speed and high-capacity communication service for such a radio terminal, a technology for strengthening the link between the WWAN and the WLAN is discussed in 3GPP (Third Generation Partnership Project).

As one of these technologies, there is discussed a method of transmitting, by a base station of the WWAN, a setting message for instructing a radio terminal to be connected to the WWAN base station to perform a process of connecting to the WLAN. The connection process between the radio terminal and the WLAN is sometimes referred to as "association".

### PRIOR ART DOCUMENT

### NON-PATENT DOCUMENT

Non Patent Document 1: 3GPP Technical Specification "TS 36.300 V13.1.0" September, 2015

### SUMMARY OF THE INVENTION

A radio terminal according to a first aspect is to be connected to a base station of WWAN (Wireless Wide Area Network). The radio terminal comprises a controller configured to perform the processes of: receiving, from the base station, a setting message for instructing a connection process between the radio terminal and a WLAN (Wireless Local Area Network); receiving timer information for setting a timer for determining a failure of the connection process between the radio terminal and the WLAN, the timer information being included in the setting message; starting a timer based on the timer information; determining that the connection process has failed, if the timer expires; and transmitting, to the base station, a failure message indicating a failure of the connection process.

A base station according to a second aspect is a base station of WWAN (Wireless Wide Area Network). The base station comprises a controller configured to perform the processes of: transmitting, to a WLAN (Wireless Local Area Network) terminal node having an interface with the base station, a request message requesting a resource allocation to a radio terminal to be connected to the base station; receiving, from the WLAN terminal node, an acknowledgment message to the request message; and transmitting, to the radio terminal, a setting message for instructing a connection process between the radio terminal and a WLAN. The controller includes timer information for setting a timer for determining a failure of the connection process between the radio terminal and the WLAN, into the setting message.

A base station according to a third aspect is a base station of WWAN (Wireless Wide Area Network). The base station comprises a controller configured to perform the processes of: transmitting, to a WLAN (Wireless Local Area Network) terminal node having an interface with the base station, a request message requesting a resource allocation to a radio terminal to be connected to the base station; receiving, from the WLAN terminal node, an acknowledgment message to the request message; transmitting, to the radio terminal, a setting message for instructing a connection process between the radio terminal and a WLAN; receiving, from the radio terminal, a setting complete message to the setting message; and starting, in response to reception of the acknowledgment message or reception of the setting complete message, a timer for determining a failure of the connection process between the radio terminal and the WLAN.

A WLAN (Wireless Local Area Network) terminal node according to a fourth aspect has an interface with a base station of WWAN (Wireless Wide Area Network). The WLAN terminal node comprises a controller configured to perform the processes of: receiving, from the base station, a request message requesting a resource allocation to a radio terminal to be connected to the base station; transmitting, to the base station, an acknowledgment message to the request message; and starting, in response to transmission of the acknowledgment message, a timer for determining a failure of a connection process between the radio terminal and a WLAN.

A base station according to a fifth aspect is a base station of WWAN (Wireless Wide Area Network). The base station comprises a controller configured to perform the processes of: transmitting, to a WLAN (Wireless Local Area Network) terminal node having an interface with the base station, a request message requesting a resource allocation to a radio terminal to be connected to the base station; receiving, from the WLAN terminal node, an acknowledgment message to the request message; transmitting, to the radio terminal, a setting message for instructing a connection process between the radio terminal and a WLAN; and determining that the connection process has failed, in response to reception of a failure message indicating a failure of the connection process, from the WLAN terminal node, or reception of a failure notification indicating the failure of the connection process, from the radio terminal.

### BRIEF DESCRIPTION OF THE DRAWINGS

Fig. 1 is a diagram illustrating an overall system configuration according to an embodiment.
Fig. 2 is a diagram illustrating a network interface according to the embodiment.
Fig. 3 is a protocol stack diagram of a radio interface.
Fig. 4 is a block diagram of a UE (radio terminal).
Fig. 5 is a block diagram of an eNB (base station).
Fig. 6 is a block diagram of a WT (WLAN terminal node).
Fig. 7 is a diagram illustrating a radio protocol configuration of LWA.
Fig. 8 is a diagram illustrating a WT Addition procedure.
Fig. 9 is a flowchart illustrating an operation pattern 1 of an eNB according to a first embodiment.
Fig. 10 is a flowchart illustrating an operation pattern 2 of the eNB according to the first embodiment.
Fig. 11 is a flowchart illustrating an operation of a UE according to a second embodiment.
Fig. 12 is a flowchart illustrating an operation of an eNB according to the second embodiment.
Fig. 13 is a flowchart illustrating an operation of a WT according to a third embodiment.
Fig. 14 is a flowchart illustrating an operation of a UE according to a fourth embodiment.

### DESCRIPTION OF THE EMBODIMENT

A radio terminal according to the embodiment is to be connected to a base station of WWAN (Wireless Wide Area Network). The radio terminal comprises a controller configured to perform the processes of: receiving, from the base station, a setting message for instructing a connection process between the radio terminal and a WLAN (Wireless Local Area Network); receiving timer information for setting a timer for determining a failure of the connection process between the radio terminal and the WLAN, the timer information being included in the setting message; starting a timer based on the timer information; determining that the connection process has failed, if the timer expires; and transmitting, to the base station, a failure message indicating a failure of the connection process.

In the embodiment, the controller is configured to perform a process of stopping the timer, if the connection process is successful during an operation of the timer.

In the embodiment, the controller is configured to perform a process of: transmitting, if the connection process is successful during the operation of the timer, a success notification indicating a success of the connection process, to the base station.

A base station according to the embodiment is a base station of WWAN (Wireless Wide Area Network). The base station comprises a controller configured to perform the processes of: transmitting, to a WLAN (Wireless Local Area Network) terminal node having an interface with the base station, a request message requesting a resource allocation to a radio terminal to be connected to the base station; receiving, from the WLAN terminal node, an acknowledgment message to the request message; and transmitting, to the radio terminal, a setting message for instructing a connection process between the radio terminal and a WLAN. The controller includes timer information for setting a timer for determining a failure of the connection process between the radio terminal and the WLAN, into the setting message.

A base station according to a third aspect is a base station of WWAN (Wireless Wide Area Network). The base station comprises a controller configured to perform the processes of: transmitting, to a WLAN (Wireless Local Area Network) terminal node having an interface with the base station, a request message requesting a resource allocation to a radio terminal to be connected to the base station; receiving, from the WLAN terminal node, an acknowledgment message to the request message; transmitting, to the radio terminal, a setting message for instructing a connection process between the radio terminal and a WLAN; receiving, from the radio terminal, a setting complete message to the setting message; and starting, in response to reception of the acknowledgment message or reception of the setting complete message, a timer for determining a failure of the connection process between the radio terminal and the WLAN.

In the embodiment, the controller is further configured to perform processes of: stopping the timer, if the base station receives, from the WLAN terminal node, a confirmation message indicating that the connection process has succeeded during an operation of the timer, and determining that the connection process has failed, if the timer expires without the base station receiving the confirmation message from the WLAN terminal node during the operation of the timer.

In the embodiment, the controller is further configured to perform processes of: stopping the timer, if the base station receives, from the radio terminal, a success notification indicating that the connection process has succeeded during the operation of the timer, and determining that the connection process has failed, if the timer expires without the base station receiving the success notification from the radio terminal during the operation of the timer.

In the embodiment, the controller is further configured to perform processes of: if the timer expires, performing any process from among first to third processes: the first process being a process of requesting the WLAN terminal node to release a resource for the radio terminal; the second process being a process of requesting a WLAN terminal node different from the WLAN terminal node to allocate a resource to the radio terminal, and requesting the WLAN terminal node to release the resource for the radio terminal; and the third process being a process of changing a WLAN mobility set to be set to the radio terminal, and requesting the WLAN terminal node to change the mobility set.

In the embodiment, the controller is further configured to perform a process of receiving a WLAN measurement report from the radio terminal, wherein the controller is further configured to decide one process from among the first to third processes, based on information included in the WLAN measurement report.

A WLAN (Wireless Local Area Network) terminal node according to the embodiment has an interface with a base station of WWAN (Wireless Wide Area Network). The WLAN terminal node comprises a controller configured to perform the processes of: receiving, from the base station, a request message requesting a resource allocation to a radio terminal to be connected to the base station; transmitting, to the base station, an acknowledgment message to the request message; and starting, in response to transmission of the acknowledgment message, a timer for determining a failure of a connection process between the radio terminal and a WLAN.

In the embodiment, the controller is further configured to perform processes of: stopping the timer, if the connection process is successful during an operation of the timer, and determining that the connection process has failed, if the timer expires without the connection process being successful during the operation of the timer.

In the embodiment, the controller is further configured to perform a process of: if the timer expires, transmitting a failure message indicating a failure of the connection process, to the base station.

In the embodiment, the controller includes information indicating a cause of the failure of the connection process, into the failure message.

A base station according to the embodiment is a base station of WWAN (Wireless Wide Area Network). The base station comprises a controller configured to perform the processes of: transmitting, to a WLAN (Wireless Local Area Network) terminal node having an interface with the base station, a request message requesting a resource allocation to a radio terminal to be connected to the base station; receiving, from the WLAN terminal node, an acknowledgment message to the request message; transmitting, to the radio terminal, a setting message for instructing a connection process between the radio terminal and a WLAN; and determining that the connection process has failed, in response to reception of a failure message indicating a failure of the connection process, from the WLAN terminal node, or reception of a failure notification indicating the failure of the connection process, from the radio terminal.

In the embodiment, the controller is further configured to perform any process from among first to third processes upon a determination that the connection process has failed. The first process is a process of requesting the WLAN terminal node to release a resource for the radio terminal. The second process is a process of requesting a WLAN terminal node different from the WLAN terminal node to allocate a resource to the radio terminal, and requesting the WLAN terminal node to release the resource for the radio terminal. The third process being a process of changing a WLAN mobility set to be set to the radio terminal, and requesting the WLAN terminal node to change the mobility set.

In the embodiment, the controller is configured to perform a process of receiving a WLAN measurement report from the radio terminal. The controller is configured to decide one process from among the first to third processes, based on information included in the WLAN measurement report.

### [System Configuration according to Embodiment]

A system configuration according to an embodiment will be described, below. In the embodiment, description will be provided for an example in which a WWAN system is an LTE (Long Term Evolution) system specified in 3GPP.

### (1) Overall system configuration

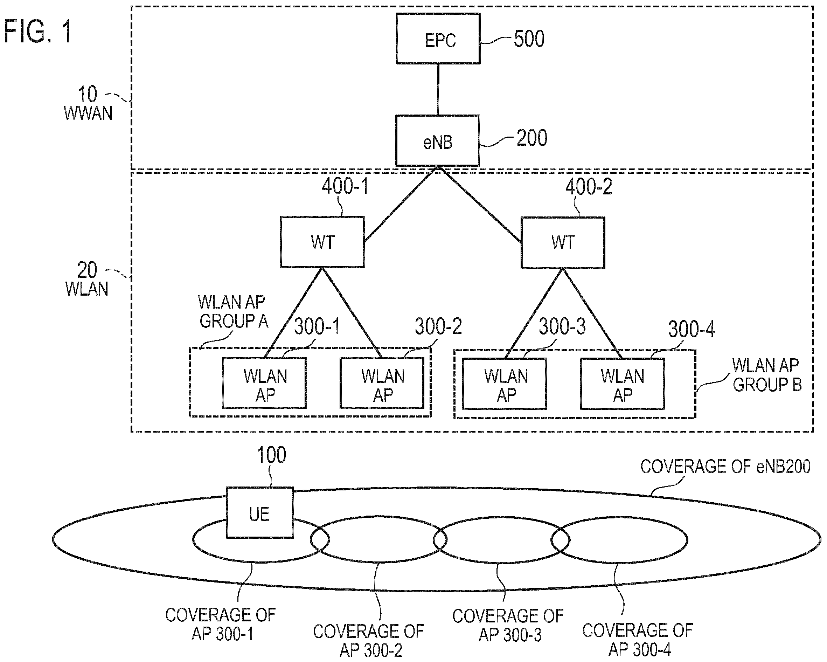

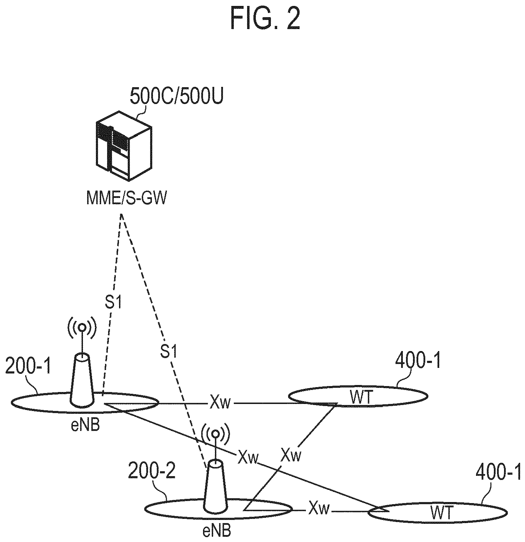

Fig. 1 is a diagram illustrating an overall system configuration according to the embodiment. Fig. 2 is a diagram illustrating a network interface according to the embodiment.

As illustrated in Fig. 1, a system according to the embodiment includes: a UE (User Equipment) 100; an eNB (E-UTRAN NodeB) 200; a WLAN AP (WLAN Access Point) 300; a WT (WLAN Termination) 400; and an EPC (Evolved Packet Core) 500. The UE 100 corresponds to a radio terminal. The eNB 200 corresponds to a WWAN base station. The WT 400 corresponds to a WLAN terminal node. The eNB 200 and the EPC 500 configure a WWAN (LTE network) 10. The WLAN AP 300 and the WT 400 configure a WLAN 20.

The UE 100 corresponds to both communication schemes of LTE communication and WLAN communication. The UE 100 is a mobile-type device. The UE 100 supports LTE/WLAN aggregation (LWA). A configuration of the UE 100 and the LWA will be described later.

The eNB 200 manages one or more cells. The eNB 200 is a device configured to perform LTE communication with the UE 100 connected to the cell of the eNB 200.

The eNB 200 configures E-UTRAN (Evolved-UMTS Terrestrial Radio Access Network). The eNB 200 is connected to an adjacent eNB via an X2 interface. The eNB 200 has a radio resource management (RRM) function, a routing function of user data (hereinafter, simply referred to as "data"), a measurement control function for mobility control and scheduling, and the like. A configuration of the eNB 200 will be described later. A "cell" is used as a term indicating the smallest unit of a radio communication area (coverage). A "cell" is also used as a term indicating a function of performing radio communication with the UE 100.

The WLAN AP 300 is a device configured to perform WLAN communication with the UE 100 connected to an AP of the WLAN AP 300. Fig. 1 illustrates an example in which four WLAN AP 300-1 to WLAN AP 300-4 are provided within the cell coverage of the eNB 200. The eNB 200 may include a function of the WLAN AP. Such a scenario is referred to as Collocated scenario.

The WT 400 is a device configured to terminate an Xw interface being an interface with the eNB 200. As illustrated in Fig. 2, the eNB 200 is connected to the WT 400 via an Xw interface. In the LWA, only an S1 interface is required as an interface with the EPC 500 (core network). That is, no interface is required between the WLAN 20 and the EPC 500 (core network). The WT 400 accommodates one or more WLAN APs 300. Fig. 1 illustrates an example in which a WT 400-1 accommodates two, a WLAN AP 300-1 and a WLAN AP 300-2, and a WT 400-2 accommodates two, a WLAN AP 300-3 and a WLAN AP 300-4.

The WLAN AP 300-1 and the WLAN AP 300-2 configure a WLAN mobility set A. The WLAN AP 300-3 and the WLAN AP 300-4 configure a WLAN mobility set B. A WLAN mobility set is a WLAN AP group in which the UE 100 to which the LWA is applied can perform switching control between the WLAN APs 300, independently from a control of the eNB 200. By using the WLAN mobility control function, the UE 100 can switch the WLAN communication from one WLAN AP to another WLAN AP within the same WLAN mobility set, in a manner transparent relative to the eNB 200.

The eNB 200 notifies the UE 100 of the WLAN mobility set. At a certain time point, the UE 100 can connect to only one WLAN mobility set. Mobility of the UE 100 to the WLAN AP 300 not belonging to the current WLAN mobility set is controlled by the eNB 200, based on a measurement report (WLAN measurement report) provided by the UE 100, for example. All the WLAN APs 300 belonging to one WLAN mobility set share the same WT 400. All WLAN identifiers belonging to one WLAN mobility set may be part of all WLAN identifiers corresponding to one WT 400. The WLAN identifier is, for example, a BSSID (Basic Service Set Identifier), an HESSID (Homogenous Extended Service Set Identifier), or an SSID (Service Set Identifier).

The EPC 500 is connected to the eNB 200 via the S1 interface. The EPC 500 corresponds to a core network. As illustrated in Fig. 2, the EPC 500 includes an MME (Mobility Management Entity) 500C and an S-GW (Serving-Gateway) 500U. The MME 500C performs various types of mobility control and the like for the UE 100. The S-GW 500U performs a data transfer control.

### (2) Radio interface

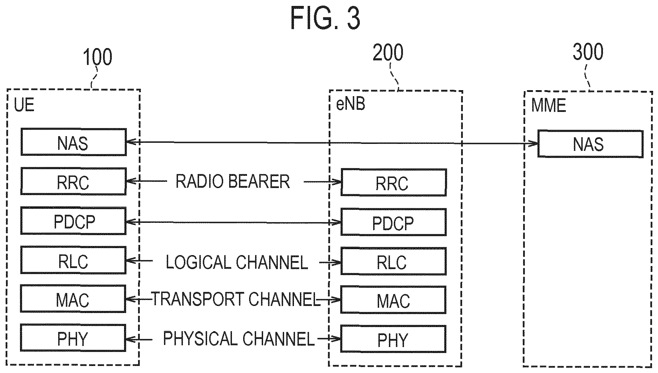

Fig. 3 is a protocol stack diagram of a radio interface. As illustrated in Fig. 3, the radio interface protocol is classified into a first layer to a third layer based on an OSI reference model. The first layer is a physical (PHY) layer. The second layer includes a MAC (Medium Access Control) layer, an RLC (Radio Link Control) layer, and a PDCP (Packet Data Convergence Protocol) layer. The third layer includes an RRC (Radio Resource Control) layer.

The physical layer performs coding/decoding, modulation/demodulation, antenna mapping/demapping, and resource mapping/demapping. Between the physical layer of the UE 100 and the physical layer of the eNB 200, data and a control signal are transmitted via a physical channel.

The MAC layer performs priority control of data, a re-transmission process by a hybrid ARQ (HARQ), a random access procedure, and the like. Between the MAC layer of the UE 100 and the MAC layer of the eNB 200, data and a control signal are transmitted via a transport channel. The MAC layer of the eNB 200 includes a scheduler. The scheduler decides a transport format (a transport block size and a modulation and coding scheme (MCS)) of an uplink and a downlink, and an allocation resource block to the UE 100.

The RLC layer transmits data to a reception-side RLC layer by utilizing the functions of the MAC layer and the physical layer. Between the RLC layer of the UE 100 and the RLC layer of the eNB 200, data and a control signal are transmitted via a logical channel.

The PDCP layer performs header compression and decompression, and encryption and decryption.

The RRC layer is defined only in a control plane that handles a control signal. Between the RRC layer of the UE 100 and the RRC layer of the eNB 200, a message (RRC message) for various types of settings is transmitted. The RRC layer controls the logical channel, the transport channel, and the physical channel, according to an establishment, a re-establishment, and a release of a radio bearer. If there is a connection (an RRC connection) between the RRC of the UE 100 and the RRC of the eNB 200, the UE 100 is in an RRC connected mode (connected mode). If there is no connection between the RRC of the UE 100 and the RRC of the eNB 200, the UE 100 is in an RRC idle mode (idle mode).

An NAS (Non-Access Stratum) layer positioned above the RRC layer performs a session management, a mobility management, and the like.

### (3) Configuration of radio terminal

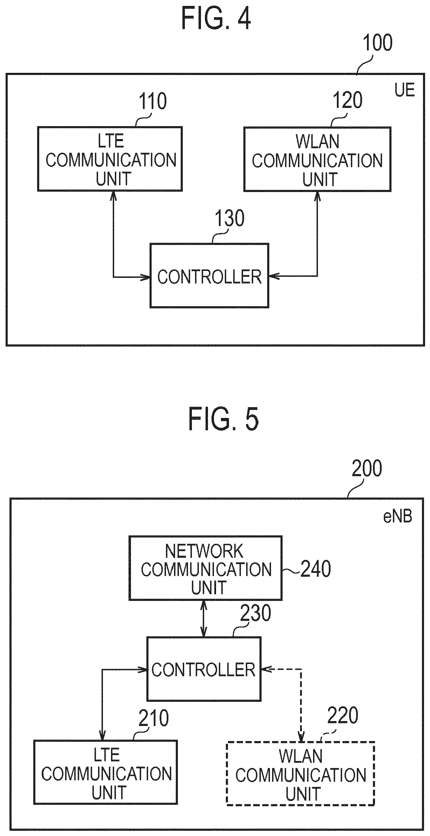

Fig. 4 is a block diagram of the UE 100 (radio terminal). As illustrated in Fig. 4, the UE 100 includes an LTE communication unit 110, a WLAN communication unit 120, and a controller 130.

The LTE communication unit 110 performs LTE communication under the control of the controller 130. The LTE communication unit 110 may execute a part of the LTE protocol. The LTE communication unit 110 includes an antenna, a transmitter unit, and a receiver unit. The transmitter unit converts a baseband signal (transmission signal) output from the controller 130 into an LTE radio signal. The transmitter unit transmits the LTE radio signal from the antenna. The receiver unit converts the LTE radio signal received by the antenna into a baseband signal (reception signal). The receiver unit outputs the baseband signal to the controller 130. The LTE communication is generally performed in a licensed band.

The WLAN communication unit 120 performs WLAN communication under the control of the controller 130. The WLAN communication unit 120 may execute a part of the WLAN protocol. The WLAN communication unit 120 includes an antenna, a transmitter unit, and a receiver unit. The transmitter unit converts a baseband signal (transmission signal) output from the controller 130 into a WLAN radio signal. The transmitter unit transmits the WLAN radio signal from the antenna. The receiver unit converts the WLAN radio signal received by the antenna into a baseband signal (reception signal). The receiver unit outputs the baseband signal to the controller 130. The WLAN communication is generally performed in the unlicensed band.

The controller 130 performs various types of controls in the UE 100. The controller 130 may execute a part of the LTE protocol and may execute a part of the WLAN protocol. The controller 130 includes a processor and a memory. The memory stores a program executed by the processor, and information used for a process by the processor. The processor may include a baseband processor and a CPU (Central Processing Unit). The baseband processor performs modulation and demodulation, coding and decoding, and the like, of the baseband signal. The CPU executes a program stored in the memory to perform various types of processes. The processor executes various types of processes described later.

### (4) Configuration of base station

Fig. 5 is a block diagram of the eNB 200 (base station). As illustrated in Fig. 5, the eNB 200 includes an LTE communication unit (WWAN communication unit) 210, a controller 230, and a network communication unit 240. However, in a case of the Collocated scenario, the eNB 200 may also include a WLAN communication unit 220.

The LTE communication unit 210 performs LTE communication under the control of the controller 230. The LTE communication unit 210 may execute a part of the LTE protocol. The LTE communication unit 210 includes an antenna, a transmitter unit, and a receiver unit. The transmitter unit converts a baseband signal (transmission signal) output from the controller 230 into an LTE radio signal. The transmitter unit transmits the LTE radio signal from the antenna. The receiver unit converts the LTE radio signal received by the antenna into a baseband signal (reception signal). The receiver unit outputs the baseband signal to the controller 230.

The WLAN communication unit 220 performs WLAN communication under the control of the controller 230. The WLAN communication unit 220 may execute a part of the WLAN protocol. The WLAN communication unit 220 includes an antenna, a transmitter unit, and a receiver unit. The transmitter unit converts a baseband signal (transmission signal) output from the controller 230 into a WLAN radio signal. The transmitter unit transmits the WLAN radio signal from the antenna. The receiver unit converts the WLAN radio signal received by the antenna into a baseband signal (reception signal). The receiver unit outputs the baseband signal to the controller 230.

The controller 230 performs various types of controls in the eNB 200. The controller 230 may execute a part of the LTE protocol and may execute a part of the WLAN protocol. The controller 230 includes a processor and a memory. The memory stores a program executed by the processor, and information used for a process by the processor. The processor may include a baseband processor and a CPU (Central Processing Unit). The baseband processor performs modulation and demodulation, coding and decoding, and the like, of the baseband signal. The CPU may include a CPU for performing various types of processes by executing the program stored in the memory. The processor executes various types of processes described later.

The network communication unit 240 is connected to an adjacent eNB 200 via the X2 interface. The network communication unit 240 is connected to the EPC 500 (MME/S-GW) via the S1 interface. The network communication unit 240 is connected to the WT 400 via the Xw interface. The network communication unit 240 is used for communication performed via the X2 interface, communication performed via the S1 interface, communication performed via the Xw interface, and the like.

### (5) Configuration of WLAN terminal node

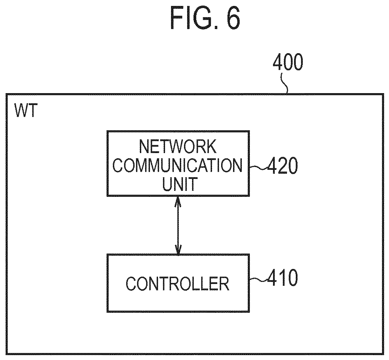

Fig. 6 is a block diagram of the WT 400 (WLAN terminal node). As illustrated in Fig. 6, the WT 400 includes a controller 410 and a network communication unit 420.

The controller 410 performs various types of controls in the WT 400. The controller 410 includes a processor and a memory. The memory stores a program executed by the processor, and information used for a process by the processor. The processor may include a CPU for performing various types of processes by executing the program stored in the memory. The processor executes various types of processes described later.

The network communication unit 420 is connected to the eNB 200 via the Xw interface. The network communication unit 420 is connected to the WLAN AP 300 via an interface in the WLAN 20. The network communication unit 420 is used for communication performed via the Xw interface, and the like.

### [Overview of LWA]

An overview of LWA will be explained.

### (1) Radio protocol configuration

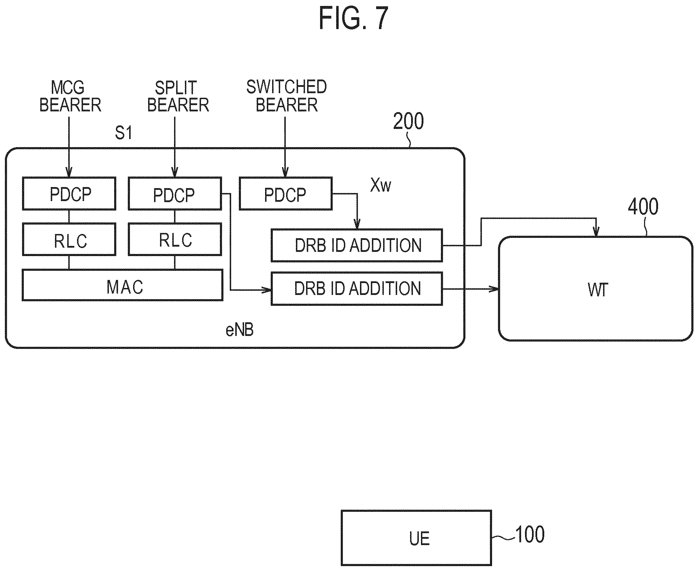

Fig. 7 is a diagram illustrating a radio protocol configuration of LWA. Here, downlink LWA is described, however, LWA is also applicable to the uplink. In the LWA, the UE 100 in the RRC connected mode is set by the eNB 200 to utilize an LTE radio resource and a WLAN radio resource. In the LWA, a bearer with a corresponding radio protocol existing in both the eNB 200 and the WLAN 20 so that both the eNB resource and the WLAN resource can be utilized, may be referred to as "LWA bearer".

As illustrated in Fig. 7, data of one bearer (MCG Bearer) of the UE 100 is transmitted from the eNB 200 to the UE 100. At least part of the data of another bearer (Split Bearer, Switched Bearer) of the UE 100 is transmitted from the eNB 200 to the UE 100, via the WT 400 (WLAN 20). The other bearer corresponds to the LWA bearer. There may only be one of the Split Bearer and the Switched Bearer.

The eNB 200 includes a PDCP entity and an RLC entity corresponding to the MCG Bearer. The PDCP entity processes data (PDCP SDU) transferred from the S-GW 500U via the S1 interface. The PDCP entity hands over the processed data (PDCP PDU) to the RLC entity. The RLC entity acquires the data from the PDCP entity as RLC SDU. The RLC entity hands over the processed data (RLC PDU) to an LTE MAC entity. The LTE MAC entity acquires the data from the RLC entity as MAC SDU. The LTE MAC entity transmits the processed data (MAC PDU) via an entity of the physical layer (not illustrated), to the UE 100.

The eNB 200 may include a PDCP entity, an RLC entity, and a "DRB ID Addition" corresponding to the Split Bearer. The PDCP entity processes the data (PDCP SDU) transferred from the S-GW 500U via the S1 interface. The PDCP entity hands over at least part of the processed data (PDCP PDU) to the "DRB ID Addition" as LWA PDU. The "DRB ID Addition" adds a DRB (Data Radio Bearer) identifier to the LWA PDU, and transfers the resulting PDU to the WT 400 via the Xw interface. The remaining PDCP PDU is handed over to the RLC entity and is transmitted to the UE 100 through a similar process to the MCG Bearer.

The eNB 200 may include a PDCP entity and a "DRB ID Addition" corresponding to the Switched Bearer. The PDCP entity processes data (PDCP SDU) transferred from the S-GW 500U via the S1 interface. The PDCP entity hands over the processed data (PDCP PDU) to the "DRB ID Addition" as LWA PDU. The "DRB ID Addition" adds the DRB identifier to the LWA PDU, and transfers the resulting PDU to the WT 400 via the Xw interface.

### (2) WT addition procedure

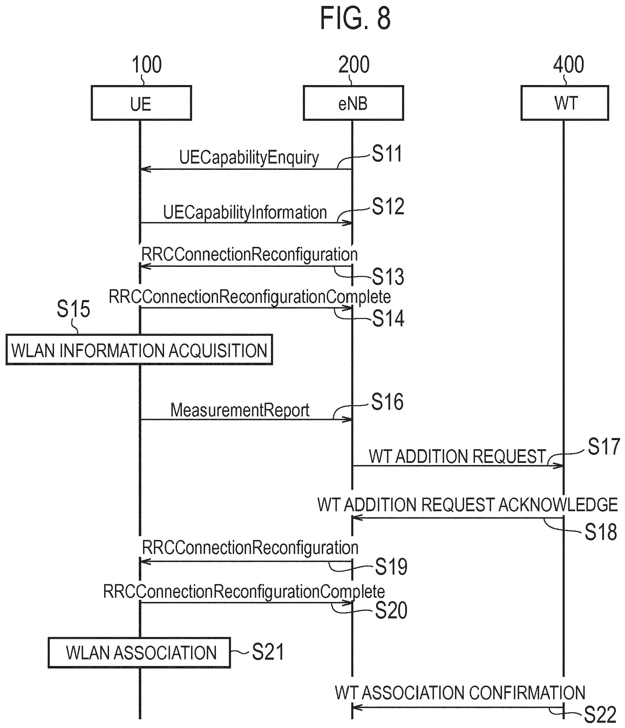

Fig. 8 is a diagram illustrating a WT Addition procedure. The WT Addition procedure is initiated by the eNB 200 so that a UE context is established in the WT 400 to provide the WLAN resource to the UE 100.

In step S11, the eNB 200 requests the UE 100 to report a LWA radio access capability of the UE 100 (UE Capability Enquiry).

In step S12, the UE 100 reports, to the eNB 200, a LWA capability (UE Capability Information) including a WLAN band to support.

In step S13, the eNB 200 sets a WLAN measurement report to the UE 100. Such a setting is performed by an "RRC Connection Reconfiguration" message, being a dedicated RRC signaling addressed to the UE 100.

In step S14, the UE 100 applies a measurement setting, and transmits an "RRC Connection Reconfiguration Complete" message to the eNB 200.

In step S15, the UE 100 acquires WLAN information, based on the measurement setting.

In step S16, the UE 100 transmits, to the eNB 200, a Measurement Report including a measurement result for the WLAN 20 (WLAN AP 300). Hereinafter, such a measurement report is referred to as "WLAN measurement report". The WLAN measurement report includes a WLAN identifier and a WLAN metric value in which the measurement was performed. The WLAN metric value is, for example, a WLAN channel utilization (BSS load), a WLAN backhaul data rate, a WLAN signal strength (Beacon RSSI), or the like.

In step S17, the eNB 200 decides to request the WT 400 to allocate the WLAN resource to a bearer of the UE 100, based on the WLAN measurement report. The eNB 200 transmits a "WT Addition Request" message to the WT 400, via the Xw interface. The addition request (WT Addition Request) includes context information on the UE 100 (UE Context).

In step S18, if the WLAN resource request can be approved, the WT 400 transmits a "WT Addition Request Acknowledge" message to the eNB 200, via the Xw interface.

In step S19, the eNB 200 transmits, to the UE 100, the "RRC Connection Reconfiguration" message including a new radio resource setting.

In step S20, the UE 100 applies the new radio resource setting and transmits the "RRC Connection Reconfiguration Complete" message to the eNB 200.

In step S21, the UE 100 performs a connection process (association) with the WLAN 20. Hereinafter, the connection process (association) between the UE 100 and the WLAN 20 is referred to as "WLAN association".

In step S22, the WLAN 20 transmits to the eNB 200, via the Xw interface, a "WT Association Confirmation" message indicating that the WLAN association between the UE 100 and the eNB 200 is successful.

### [First Embodiment]

A first embodiment will be described.

In the above-described WT addition procedure, the WLAN association between the UE 100 and the WLAN 20 may not always be successful. However, at present, a behavior if the WLAN association fails has not been discussed and it is unclear how a failure of the WLAN association is determined. In particular, if the WLAN association fails, it is likely that the eNB 200 continues waiting for the "WT Association Confirmation" message, even though the WLAN 20 does not transmit the "WT Association Confirmation" message.

### (1) Base station according to first embodiment

As illustrated in Fig. 8, the controller 230 of the eNB 200 (base station) according to the first embodiment (see Fig. 5) performs: a process of transmitting a request message requesting, to the WT 400 having an Xw interface with the eNB 200, a resource allocation to the UE 100 to be connected to the eNB 200 (step S17: WT Addition Request); a process of receiving, from the WT 400, an acknowledgment message to the request message (step S18: WT Addition Request Acknowledge); a process of transmitting, to the UE 100, a setting message for instructing the WLAN association (step S19: RRC Connection Reconfiguration); and a process of receiving, from the UE 100, a setting complete message to the setting message (step S20: RRC Connection Reconfiguration Complete).

In response to reception of the acknowledgment message (step S18: WT Addition Request Acknowledge) or the reception of the setting complete message (step S20: RRC Connection Reconfiguration Complete), the controller 230 starts a timer for determining a failure of the WLAN association between the UE 100 and the WLAN. It is noted that the timer may be set to the eNB 200 by an OAM (Operation Administration Maintenance) function.

As a result, the eNB 200 can wait only for a constant duration until the WLAN association is successful. If the constant duration has elapsed (that is, if the timer expires), the eNB 200 can determine that the WLAN association has failed.

In the first embodiment, if the eNB 200 receives, from the WT 400, during an operation (running) of the timer, a confirmation message indicating that the WLAN association was successful (WT Association Confirmation), the controller 230 stops the timer. If the timer expires without the eNB 200 receiving the confirmation message (WT Association Confirmation) from the WT 400 during the operation of the timer, the controller 230 determines that the WLAN association has failed. As a result, the eNB 200 can adequately determine whether or not the WLAN association has failed, based on the confirmation message (WT Association Confirmation).

### (2) Operation pattern 1 of base station according to first embodiment

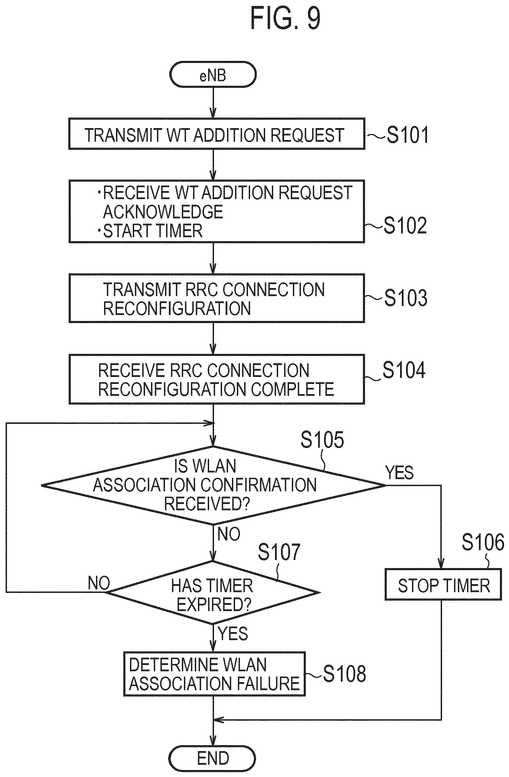

Fig. 9 is a flowchart illustrating an operation pattern 1 of the eNB 200 (base station) according to the first embodiment.

As illustrated in Fig. 9, in step S101, the controller 230 transmits, to the WT 400, the "WT Addition Request" message requesting a resource allocation to the UE 100 to be connected to the eNB 200.

In step S102, the controller 230 receives, from the WT 400, the "WT Addition Request Acknowledge" message, being an acknowledgment message to the "WT Addition Request" message. If receiving, from the WLAN 20, a negative acknowledgment message to the "WT Addition Request" message, the controller 230 may cancel the present flow. The controller 230 starts the timer for determining the failure of the WLAN association between the UE 100 and the WLAN.

In step S103, the controller 230 transmits, to the UE 100, the "RRC Connection Reconfiguration" message for instructing the WLAN association.

In step S104, the controller 230 receives, from the UE 100, the "RRC Connection Reconfiguration Complete" message. If receiving, from the UE 100, a negative acknowledgment message to the "RRC Connection Reconfiguration" message, the controller 230 may cancel the present flow.

If the eNB 200 receives, from the WT 400, during the operation (running) of the timer, the "WT Association Confirmation" message indicating that the WLAN association was successful (step S105: Yes), the controller 230 stops the timer in step S106.

If the timer expires (step S107: Yes) without the eNB 200 receiving the "WT Association Confirmation" message from the WT 400 during the operation of the timer (step S105: No), the controller 230 determines that the WLAN association has failed in step S108.

### (3) Operation pattern 2 according to first embodiment

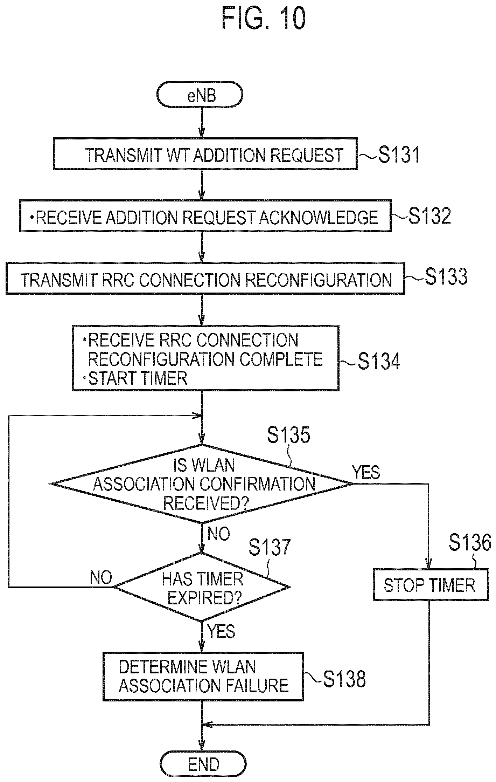

Fig. 10 is a flowchart illustrating an operation pattern 2 of the eNB 200 (base station) according to the first embodiment. Here, description proceeds with a focus on a difference from the operation pattern 1.

As illustrated in Fig. 10, in step S131, the controller 230 transmits the "WT Addition Request" message to the WT 400.

In step S132, the controller 230 receives the "WT Addition Request Acknowledge" message from the WT 400.

In step S133, the controller 230 transmits, to the UE 100, the "RRC Connection Reconfiguration" message for instructing the WLAN association.

In step S134, the controller 230 receives, from the UE 100, the "RRC Connection Reconfiguration Complete" message. The controller 230 starts the timer for determining the failure of the WLAN association between the UE 100 and the WLAN.

The subsequent operations (steps S135 to S138) are similar to those in the operation pattern 1.

### (4) Operation upon WLAN association failure determination

If the timer expires (that is, if it is determined that the WLAN association has failed), the controller 230 performs any process of first to third processes.

The first process is a process of requesting the WT 400 to release a resource for the UE 100. That is, the first process assures that LWA is not performed. Specifically, the controller 230 transmits a "WT Release Request" message to the WT 400 (first WT) having transmitted the "WT Addition Request Acknowledge" message to the eNB 200.

The second process is a process of requesting a different WT (second WT) to allocate the resource to the UE 100, and requesting the original WT (first WT) to release the resource for the UE 100. That is, in the second process, the LWA by a WT different from the original WT (the first WT) is attempted. Specifically, the controller 230 transmits the "WT Addition Request" message to the different WT (the second WT). Afterwards, the controller 230 transmits the "WT Release Request" message to the original WT (the first WT).

The third process is a process of changing the WLAN mobility set to be set to the UE 100 and requesting the WT 400 to change the mobility set. That is, in the third process, the WLAN mobility set to be set to the UE 100 is changed without changing the original WT (the first WT). Specifically, the controller 230 transmits the "WT Modification Request" message to the original WT (the first WT) and transmits the "RRC Connection Reconfiguration" message to the UE 100. Here, the WLAN 20 knows the WLAN mobility set newly set to the UE 100, and thus, it is possible to smoothly perform data transfer from a source AP to a target AP when the UE 100 has performed AP switching in the WLAN mobility set.

The controller 230 performs a process of receiving the WLAN measurement report from the UE 100 (see step S16 in Fig. 8) and may decide one process of the first to third processes, based on information included in the WLAN measurement report.

Specifically, if no information on an AP other than the AP included in the WLAN mobility set currently set to the UE 100 is included in the WLAN measurement report from the UE 100, the controller 230 selects the first process.

If the information on the AP other than the AP included in the WLAN mobility set currently set to the UE 100 is included in the WLAN measurement report from the UE 100 and the AP belongs to the different WT (the second WT), the controller 230 selects the second process. The controller 230 can comprehend the WT to which the AP belongs by inquiring, for example, the OAM or the like, based on the information on the AP (the WLAN identifier).

If the information on the AP other than the AP included in the WLAN mobility set currently set to the UE 100 is included in the WLAN measurement report from the UE 100 and the AP belongs to the same WT (the first WT), the controller 230 selects the third process.

### [Second Embodiment]

A second embodiment will be described.

In the first embodiment, the eNB 200 determines whether or not the WLAN association has failed, based on the "WT Association Confirmation" message from the WT 400. On the other hand, in the second embodiment, the eNB 200 determines whether or not the WLAN association has failed, based on a WLAN association success notification (hereinafter referred to as "Successful Indication") from the UE 100.

### (1) Radio terminal according to second embodiment

As illustrated in Fig. 8, the controller 130 (see Fig. 4) of the UE 100 (radio terminal) according to the second embodiment performs: a process of receiving, from the eNB 200, a setting message for instructing the WLAN association (step S19: RRC Connection Reconfiguration); and a process of transmitting, to the eNB 200, the setting complete message to the setting message (step S20: RRC Connection Reconfiguration Complete).

In response to transmission of the setting complete message, the controller 130 starts the timer for determining the failure of the WLAN association between the UE 100 and the WLAN 20. The timer is set by the eNB 200. For example, the eNB 200 may set the timer to the UE 100 by the "RRC Connection Reconfiguration" message. For example, the eNB 200 may set the timer to the UE 100 by an SIB (System Information Block) over broadcast.

If the WLAN association is successful during the operation of the timer, the controller 130 stops the timer. If the WLAN association is successful during the operation of the timer, the controller 130 transmits, to the eNB 200, the "Successful Indication" indicating a success of the WLAN association.

If the timer expires without the WLAN association succeeding during the operation of the timer, the controller 130 determines that the WLAN association has failed. If the timer expires, the controller 130 cancels transmitting the "Successful Indication" to the eNB 200.

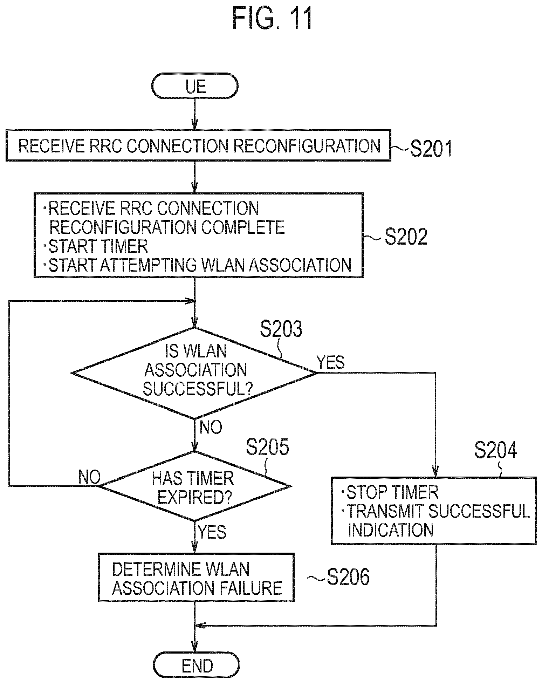

Fig. 11 is a flowchart illustrating an operation of the UE 100 according to the second embodiment.

As illustrated in Fig. 11, in step S201, the controller 130 receives, from the eNB 200, the "RRC Connection Reconfiguration" message for instructing the WLAN association.

In step S202, the controller 130 transmits the "RRC Connection Reconfiguration Complete" message to the eNB 200. The controller 130 starts the timer for determining the failure of the WLAN association. The controller 130 starts attempting the WLAN association. During the operation of the timer, the controller 130 may repeatedly attempt the WLAN association.

If the WLAN association is successful during the operation of the timer (step S203: Yes), the controller 130 stops the timer in step S204. The controller 130 transmits, to the eNB 200, the "Successful Indication" indicating the success of the WLAN association.

If the timer expires (step S205: Yes) without the WLAN association succeeding during the operation of the timer (step S203: No), the controller 130 determines that the WLAN association has failed in step S206. In this case, the controller 130 does not transmit the "Successful Indication" to the eNB 200. The controller 130 cancels attempting the WLAN association.

### (2) Base station according to second embodiment

The controller 230 (see Fig. 5) of the eNB 200 (base station) according to the second embodiment manages a timer of the same duration as the timer set to the UE 100. In response to reception of the "RRC Connection Reconfiguration Complete" message from the UE 100, the controller 230 starts the timer.

If receiving, from the UE 100, during the operation of the timer, the "Successful Indication" indicating that the WLAN association was successful, the controller 230 stops the timer. If the timer expires without reception of the "Successful Indication" from the UE 100 during the operation of the timer, the controller 230 determines that the WLAN association has failed. An operation when determining that the WLAN association has failed (operation upon WLAN association failure determination), is similar to that in the first embodiment.

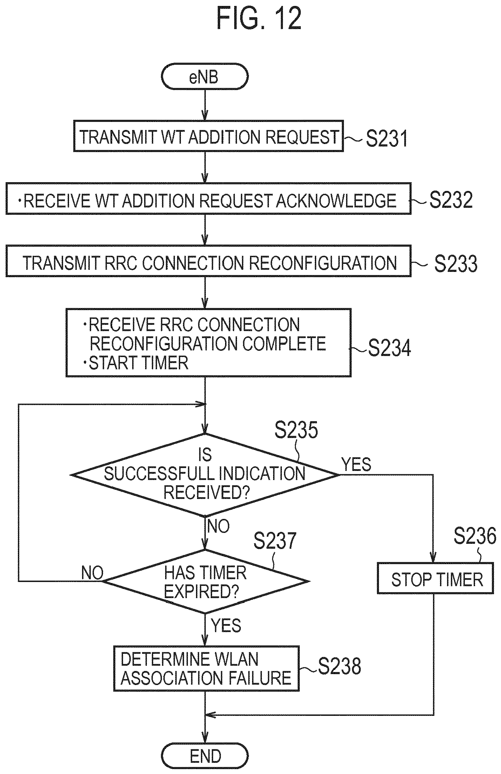

Fig. 12 is a flowchart illustrating an operation of the eNB 200 (base station) according to the second embodiment. Description proceeds with a focus on a difference from the first embodiment.

As illustrated in Fig. 12, in step S231, the controller 230 transmits the "WT Addition Request" message to the WT 400.

In step S232, the controller 230 receives the "WT Addition Request Acknowledge" message from the WT 400.

In step S233, the controller 230 transmits, to the UE 100, the "RRC Connection Reconfiguration" message for instructing the WLAN association.

In step S234, the controller 230 receives, from the UE 100, the "RRC Connection Reconfiguration Complete" message. The controller 230 starts the timer for determining the failure of the WLAN association between the UE 100 and the WLAN.

If the eNB 200 receives, from the UE 100, during the operation of the timer, the "Successful Indication" indicating that the WLAN association was successful (step S235: Yes), the controller 230 stops the timer in step S236.

If the timer expires (step S237: Yes) without the eNB 200 receiving the "Successful Indication" message from the UE 100 during the operation of the timer (step S235: No), the controller 230 determines that the WLAN association has failed in step S238.

### [Third Embodiment]

A third embodiment will be described.

In the first embodiment and the second embodiment, the timer managed by the eNB 200 is used to determine whether or not the WLAN association has failed. In the third embodiment, a timer managed by the WT 400 is used to determine whether or not the WLAN association has failed.

As illustrated in Fig. 8, the controller 410 (see Fig. 6) of the WT 400 according to the third embodiment performs: a process of receiving, from the eNB 200, a request message requesting a resource allocation to the UE 100 to be connected to the eNB 200 (step S17: WT Addition Request); and a process of transmitting, to the eNB 200, an acknowledgment message to the request message (step S18: WT Addition Request Acknowledge). In response to transmission of the acknowledgment message, the controller 410 starts the timer for determining the failure of the WLAN association between the UE 100 and the WLAN. The timer may be set to the WT 400 by the OAM function. The timer may be set to the WT 400 by the eNB 200.

If the WLAN association is successful during the operation of the timer, the controller 410 stops the timer. In this case, the controller 410 transmits the "WT Association Confirmation" message to the eNB 200.

If the timer expires without the WLAN association succeeding during the operation of the timer, the controller 410 determines that the WLAN association has failed. If the timer expires, the controller 410 transmits, to the eNB 200, a failure message (hereinafter referred to as "WT Association Failure") indicating the failure of the WLAN association.

As a result, the eNB 200 can comprehend that the WLAN association has failed, based on the "WT Association Failure" message. Specifically, in response to reception of the "WT Association Failure" message from the WT 400, the eNB 200 determines that the WLAN association has failed. An operation when determining that the WLAN association has failed (operation upon WLAN association failure determination), is similar to that in the first embodiment.

The controller 410 may include information indicating a cause for the failure of the WLAN association, into the "WT Association Failure" message. As such a cause, the information may indicate, for example, that the failure of the WLAN association originates in a problem on the WLAN 20 (WT 400) side.

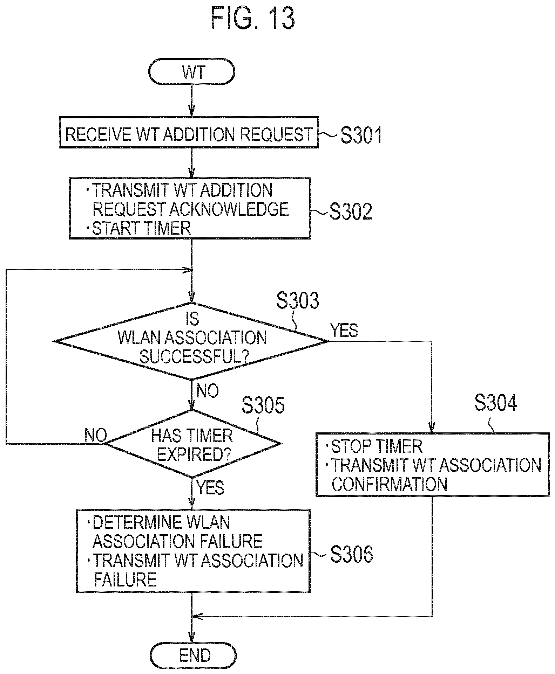

Fig. 13 is a flowchart illustrating an operation of the WT 400 according to the third embodiment.

As illustrated in Fig. 13, in step S301, the controller 410 receives the "WT Addition Request" message from the eNB 200.

In step S302, the controller 410 transmits the "WT Addition Request Acknowledge" message to the eNB 200. The controller 410 starts the timer for determining the failure of the WLAN association.

If the WLAN association is successful during the operation of the timer (step S303: Yes), the controller 410 stops the timer in step S304. The controller 410 transmits the "WT Association Confirmation" message to the eNB 200.

If the timer expires (step S305: Yes) without the WLAN association succeeding during the operation of the timer (step S303: No), the controller 410 determines that the WLAN association has failed in step S306. The controller 410 transmits, to the eNB 200, the "WT Association Failure" message indicating the failure of the WLAN association.

### [Fourth Embodiment]

A fourth embodiment will be described.

In the first embodiment and the second embodiment, the timer managed by the eNB 200 is used to determine whether or not the WLAN association has failed. In the third embodiment, the timer managed by the WT 400 is used to determine whether or not the WLAN association has failed. In the fourth embodiment, a timer managed by the UE 100 is used to determine whether or not the WLAN association has failed.

Similarly to the second embodiment, the controller 130 (see Fig. 4) of the UE 100 (radio terminal) according to the fourth embodiment starts, in response to transmission of the "RRC Connection Reconfiguration Complete" message, the timer for determining the failure of the WLAN association between the UE 100 and the WLAN 20. The timer is set by the eNB 200. For example, the eNB 200 may set the timer to the UE 100 by the "RRC Connection Reconfiguration" message. For example, the eNB 200 may set the timer to the UE 100 by an SIB (System Information Block) over broadcast.

If the WLAN association is successful during the operation of the timer, the controller 130 stops the timer. If the WLAN association is successful during the operation of the timer, the controller 130 may transmit, to the eNB 200, the "Successful Indication" indicating the success of the WLAN association.

If the timer expires without the WLAN association succeeding during the operation of the timer, the controller 130 determines that the WLAN association has failed. If the timer expires, the controller 130 transmits, to the eNB 200, "Association Failure" being a failure notification indicating the failure of the WLAN association.

As a result, the eNB 200 can comprehend that the WLAN association has failed, based on the "Association Failure" from the UE 100. Specifically, in response to reception of the "Association Failure" from the UE 100, the eNB 200 determines that the WLAN association has failed. An operation when determining that the WLAN association has failed (operation upon WLAN association failure determination), is similar to that in the first embodiment. The "Association Failure" may include information indicating the cause for the failure of the WLAN association.

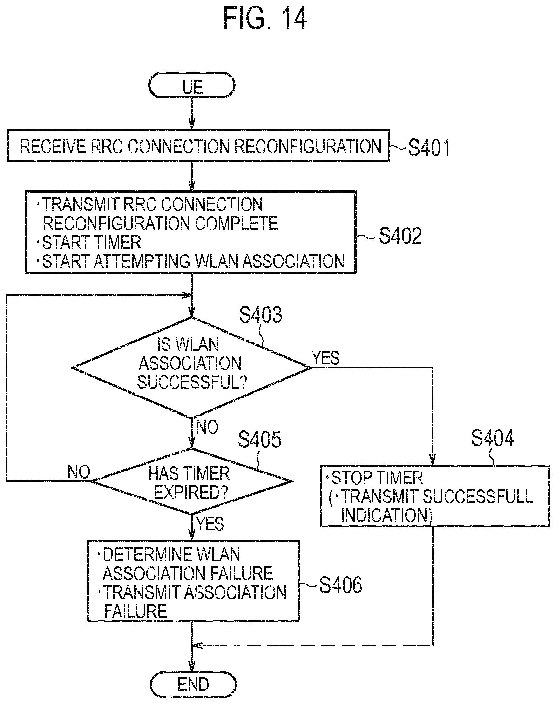

Fig. 14 is a flowchart illustrating an operation of the UE 100 according to the fourth embodiment.

As illustrated in Fig. 14, in step S401, the controller 130 receives, from the eNB 200, the "RRC Connection Reconfiguration" message for instructing the WLAN association.

In step S402, the controller 130 transmits the "RRC Connection Reconfiguration Complete" message to the eNB 200. The controller 130 starts the timer for determining the failure of the WLAN association. The controller 130 starts attempting the WLAN association. During the operation of the timer, the controller 130 may repeatedly attempt the WLAN association.

If the WLAN association is successful during the operation of the timer (step S403: Yes), the controller 130 stops the timer in step S404. The controller 130 may transmit, to the eNB 200, the "Successful Indication" indicating the success of the WLAN association.

If the timer expires (step S405: Yes) without the WLAN association succeeding during the operation of the timer (step S403: No), the controller 130 determines that the WLAN association has failed in step S406. The controller 130 transmits the "Association Failure" to the eNB 200. Further, the controller 130 cancels attempting the WLAN association.

### [Other Embodiments]

In the above-described second embodiment and fourth embodiment, an example is described in which the timer is set from the eNB 200 to the UE 100. However, a counter may be used instead of the timer. Specifically, the eNB 200 sets an upper limit of the number of attempts of the WLAN association, to the UE 100. The UE 100 counts the number of attempts of the WLAN association and if a count value reaches the upper limit, the UE 100 determines that the WLAN association has failed. The other operations are similar to those in the second embodiment and the fourth embodiment.

In each embodiment described above, after stopping the timer, the eNB 200, the WT 400, and the UE 100 reset (clear) the timer or reset the timer to an initial value. After the timer has expired, the eNB 200, the WT 400, and the UE 100 reset (clear) the timer or reset the timer to an initial value.

In each embodiment described above, the LTE system is exemplified as the WWAN system. However, the present invention is not limited to the LTE system. The present invention may be applied to a WWAN system other than the LTE system.

The entire content of Japanese Patent Application No. 2015-218938 (filed on November 6, 2015) is incorporated herein by reference.

### INDUSTRIAL APPLICABILITY

The present invention is useful in the field of radio communication.

## Claims

1. A radio terminal to be connected to a base station of WWAN (Wireless Wide Area Network), the radio terminal comprising:
a controller configured to perform the processes of:
receiving, from the base station, a setting message for instructing a connection process between the radio terminal and a WLAN (Wireless Local Area Network);
receiving timer information for setting a timer for determining a failure of the connection process between the radio terminal and the WLAN, the timer information being included in the setting message;
starting a timer based on the timer information;
determining that the connection process has failed, if the timer expires; and
transmitting, to the base station, a failure message indicating a failure of the connection process.

2. The radio terminal according to claim 1, wherein
the controller is configured to perform a process of:
stopping the timer, if the connection process is successful during an operation of the timer.

3. The radio terminal according to claim 1, wherein
the controller is configured to perform a process of:
transmitting, if the connection process is successful during the operation of the timer, a success notification indicating a success of the connection process, to the base station.

4. A base station of WWAN (Wireless Wide Area Network), the base station comprising:
a controller configured to perform the processes of:
transmitting, to a WLAN (Wireless Local Area Network) terminal node having an interface with the base station, a request message requesting a resource allocation to a radio terminal to be connected to the base station;
receiving, from the WLAN terminal node, an acknowledgment message to the request message; and
transmitting, to the radio terminal, a setting message for instructing a connection process between the radio terminal and a WLAN, wherein
the controller includes timer information for setting a timer for determining a failure of the connection process between the radio terminal and the WLAN, into the setting message.

5. A base station of WWAN (Wireless Wide Area Network), the base station comprising:
a controller configured to perform the processes of:
transmitting, to a WLAN (Wireless Local Area Network) terminal node having an interface with the base station, a request message requesting a resource allocation to a radio terminal to be connected to the base station;
receiving, from the WLAN terminal node, an acknowledgment message to the request message;
transmitting, to the radio terminal, a setting message for instructing a connection process between the radio terminal and a WLAN;
receiving, from the radio terminal, a setting complete message to the setting message; and
starting, in response to reception of the acknowledgment message or reception of the setting complete message, a timer for determining a failure of the connection process between the radio terminal and the WLAN.

6. The base station according to claim 5, wherein
the controller is further configured to perform processes of:
stopping the timer, if the base station receives, from the WLAN terminal node, a confirmation message indicating that the connection process has succeeded during an operation of the timer, and
determining that the connection process has failed, if the timer expires without the base station receiving the confirmation message from the WLAN terminal node during the operation of the timer.

7. The base station according to claim 5, wherein
the controller is further configured to perform processes of:
stopping the timer, if the base station receives, from the radio terminal, a success notification indicating that the connection process has succeeded during the operation of the timer, and
determining that the connection process has failed, if the timer expires without the base station receiving the success notification from the radio terminal during the operation of the timer.

8. The base station according to claim 6, wherein
the controller is further configured to perform processes of:
if the timer expires, performing any process from among first to third processes:
the first process being a process of requesting the WLAN terminal node to release a resource for the radio terminal;
the second process being a process of requesting a WLAN terminal node different from the WLAN terminal node to allocate a resource to the radio terminal, and requesting the WLAN terminal node to release the resource for the radio terminal; and
the third process being a process of changing a WLAN mobility set to be set to the radio terminal, and requesting the WLAN terminal node to change the mobility set.

9. The base station according to claim 8, wherein
the controller is further configured to perform a process of receiving a WLAN measurement report from the radio terminal, wherein
the controller is further configured to decide one process from among the first to third processes, based on information included in the WLAN measurement report.

10. A WLAN (Wireless Local Area Network) terminal node having an interface with a base station of WWAN (Wireless Wide Area Network), the WLAN terminal node comprising:
a controller configured to perform the processes of:
receiving, from the base station, a request message requesting a resource allocation to a radio terminal to be connected to the base station;
transmitting, to the base station, an acknowledgment message to the request message; and
starting, in response to transmission of the acknowledgment message, a timer for determining a failure of a connection process between the radio terminal and a WLAN.

11. The WLAN terminal node according to claim 10, wherein
the controller is further configured to perform processes of:
stopping the timer, if the connection process is successful during an operation of the timer, and
determining that the connection process has failed, if the timer expires without the connection process being successful during the operation of the timer.

12. The WLAN terminal node according to claim 11, wherein
the controller is further configured to perform a process of
if the timer expires, transmitting a failure message indicating a failure of the connection process, to the base station.

13. The WLAN terminal node according to claim 12, wherein
the controller includes information indicating a cause of the failure of the connection process, into the failure message.

14. A base station of WWAN (Wireless Wide Area Network), the base station comprising:
a controller configured to perform the processes of:
transmitting, to a WLAN (Wireless Local Area Network) terminal node having an interface with the base station, a request message requesting a resource allocation to a radio terminal to be connected to the base station;
receiving, from the WLAN terminal node, an acknowledgment message to the request message;
transmitting, to the radio terminal, a setting message for instructing a connection process between the radio terminal and a WLAN; and
determining that the connection process has failed, in response to reception of a failure message indicating a failure of the connection process, from the WLAN terminal node, or reception of a failure notification indicating the failure of the connection process, from the radio terminal.

15. The base station according to claim 14, wherein
the controller is further configured to perform any process from among first to third processes upon a determination that the connection process has failed, wherein
the first process being a process of requesting the WLAN terminal node to release a resource for the radio terminal;
the second process being a process of requesting a WLAN terminal node different from the WLAN terminal node to allocate a resource to the radio terminal, and requesting the WLAN terminal node to release the resource for the radio terminal; and
the third process being a process of changing a WLAN mobility set to be set to the radio terminal, and requesting the WLAN terminal node to change the mobility set.

16. The base station according to claim 15, wherein
the controller is configured to perform a process of receiving a WLAN measurement report from the radio terminal, wherein
the controller is configured to decide one process from among the first to third processes, based on information included in the WLAN measurement report.
